(19) Europäisches Patentamt
European Patent Office
Office européen des brevets

(11) **EP 3 499 183 A1**

(12) **DEMANDE DE BREVET EUROPEEN**

(43) Date de publication:
**19.06.2019 Bulletin 2019/25**

(51) Int Cl.:
**G01B 21/16** (2006.01)  **F16G 13/00** (2006.01)
**G01M 13/02** (2019.01)  **G01B 5/16** (2006.01)
**G01B 7/04** (2006.01)  **G01B 11/14** (2006.01)

(21) Numéro de dépôt: **17208001.2**

(22) Date de dépôt: **18.12.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD TN**

(71) Demandeur: **Momentum**
**33000 Bordeaux (FR)**

(72) Inventeur: **GAUTIER, Fabrice**
**33000 BORDEAUX (FR)**

(74) Mandataire: **Ipside**
**7-9 Allées Haussmann**
**33300 Bordeaux Cedex (FR)**

(54) **PROCÉDÉ POUR LA DÉTERMINATION DE L ALLONGEMENT D'UNE CHAÎNE DE TRANSMISSION MÉCANIQUE ET DISPOSITIF IMPLÉMENTANT UN TEL PROCÉDÉ**

(57) L'invention concerne un procédé (10) et un dispositif pour la détermination d'un allongement d'une chaîne de transmission mécanique comportant un brin tendu contrôlé par deux capteurs. Selon l'invention, le procédé (10) comporte :
- une étape d'apprentissage (100) au cours de laquelle :
• des signaux numériques sont générés à partir desdits capteurs ;
• un paramètre d'ajustement entier est choisi sur la base desdits signaux numériques ;
• un coefficient de corrélation entre lesdits signaux numériques est évalué au paramètre d'ajustement pour déterminer un coefficient de corrélation initial ;

- une étape ultérieure de surveillance (110) au cours de laquelle :
• des signaux numériques sont générés à partir desdits capteurs ;
• un coefficient de corrélation courant entre lesdits signaux numériques est évalué au paramètre d'ajustement ;
• est déterminé un écart entre le coefficient de corrélation courant C'(k1) et le coefficient de corrélation initial C(k1) ou un coefficient de corrélation courant C'(k1) déterminé antérieurement, afin d'en déduire un pourcentage d'allongement ΔL% de la chaîne de transmission mécanique (1).

FIG. 2

**Description**

**DOMAINE DE L'INVENTION**

La présente invention appartient au domaine de la mécanique industrielle.

Plus particulièrement, la présente invention concerne un dispositif pour la mesure d'une variation de longueur d'un élément de transmission de mouvement pendant son utilisation.

**ETAT DE L'ART**

L'une des conséquences de l'usure d'une chaîne de transmission mécanique est l'allongement des mailles la constituant. Cet allongement peut par exemple être dû aux frottements mécaniques et à l'augmentation locale de température qui en résulte. Au-delà d'une tolérance d'allongement, généralement de l'ordre de 3%, les mailles de la chaîne s'engrènent mal avec les dents des pignons entraînant la chaîne, provoquant une usure des dents des pignons et des risques de déraillement importants ; et la chaîne doit être changée.

Afin de surveiller l'allongement d'une chaîne de transmission, il est connu des surveiller une distance entre deux points de la chaîne. Le brevet américain US 9 772 179 décrit un dispositif de surveillance de l'usure d'une chaîne par mesure de l'allongement de la chaîne. Pour réaliser cette mesure d'allongement, une vitesse de la chaîne est mesurée à l'aide de deux capteurs en mesurant le temps de trajet d'un premier point de mesure de la chaîne entre un capteur amont et un capteur aval. Cette vitesse étant calculée, la distance entre le premier point de mesure et un second point de mesure de la chaîne est ensuite calculée après mesure de l'intervalle temporel entre l'instant où le premier point passe au niveau du capteur aval et l'instant où le second point passe au niveau du capteur amont. Cette distance est ensuite comparée à une distance de référence entre les deux points lorsque la chaîne était neuve. Dans le cadre de cette solution, la distance entre les capteurs est connue et inférieure à une distance entre les points de mesure.

La demande de brevet britannique GB 2 377 918 décrit une solution analogue dans laquelle les points de mesure sont identifiés par des marqueurs.

Un inconvénient de ces solutions est qu'elles présentent des contraintes quant au positionnement des capteurs et au choix des points de mesure. Elles nécessitent par ailleurs de calculer la vitesse d'entraînement de la chaîne.

Le brevet américain US 5 563 392 décrit un dispositif pour la mesure de l'allongement d'une chaîne, au moyen de deux capteurs photoélectriques. Chaque capteur identifie la présence ou l'absence d'un type de lien de la chaîne se répétant périodiquement tout au long de la chaîne, de sorte que chaque capteur génère un signal sensiblement périodique. Préférentiellement, les capteurs sont placés de telle sorte que les signaux générés par les deux capteurs sont en phase. Lors de l'allongement de la chaîne, un déphasage apparaît entre les deux signaux, la valeur du déphasage permettant de quantifier le degré d'allongement de la chaîne.

Un inconvénient de cette solution est que la mesure du déphasage présente une sensibilité relativement faible, inversement proportionnelle à la vitesse de la chaîne de transmission, la sensibilité étant définie comme un rapport à la grandeur d'intérêt de la grandeur mesurée/déterminée pour parvenir à ladite grandeur d'intérêt.

**EXPOSE DE L'INVENTION**

L'invention propose une solution pour pallier aux inconvénients de l'art antérieur.

L'invention concerne un procédé pour la détermination d'un allongement d'une chaîne de transmission mécanique comportant un brin tendu contrôlé par deux capteurs. Selon l'invention, le procédé comporte :

- une étape d'apprentissage au cours de laquelle :

  • des signaux numériques sont générés à partir desdits capteurs au passage du brin tendu devant lesdits capteurs ;
  • un paramètre d'ajustement entier est choisi sur la base desdits signaux numériques, en fonction d'un objectif de sensibilité de la détermination de l'allongement de la chaîne de transmission ;
  • un coefficient de corrélation entre lesdits signaux numériques est évalué au paramètre d'ajustement pour déterminer un coefficient de corrélation initial ;

- une étape ultérieure de surveillance au cours de laquelle :

  • des signaux numériques sont générés à partir desdits capteurs au passage du brin tendu devant lesdits capteurs ;
  • un coefficient de corrélation courant entre lesdits signaux numériques est évalué au paramètre d'ajustement ;
  • est déterminé un écart entre le coefficient de corrélation courant et le coefficient de corrélation initial ou un coefficient de corrélation courant déterminé antérieurement, afin d'en déduire un pourcentage d'allongement de la chaîne de transmission mécanique.

Dans un mode de mise en oeuvre, le pourcentage d'allongement est déduit de la lecture d'un abaque représentant un cumul des écarts en valeur absolue entre le coefficient de corrélation courant et le coefficient de corrélation initial en fonction du pourcentage d'allongement et du paramètre d'ajustement.

Dans un mode de mise en oeuvre, le paramètre d'ajustement est choisi comme étant un paramètre maximisant ou minimisant une valeur absolue du coefficient de corrélation entre les signaux numériques.

Dans un mode de mise en oeuvre, l'étape de surveillance comporte une sous-étape de déclenchement d'au moins une alarme lorsque le pourcentage d'allongement de la chaîne de transmission dépasse au moins une valeur seuil.

Dans une mode de mise en oeuvre, une de l'au moins une valeur seuil est égale à 3%.

L'invention concerne également un dispositif pour la mise en oeuvre du procédé selon l'invention, comportant :

- une chaîne de transmission mécanique présentant un brin tendu ;
- deux capteurs à partir desquels sont générés des signaux numériques au passage de ladite chaîne de transmission devant lesdits capteurs ;

Selon l'invention, le dispositif comporte par ailleurs des moyens de calcul pour :

- choisir un paramètre d'ajustement ;
- évaluer un coefficient de corrélation initial entre lesdits signaux numériques au paramètre d'ajustement ;
- évaluer un coefficient de corrélation courant au paramètre d'ajustement, au cours du temps, et le comparer au coefficient de corrélation initial ou à un coefficient de corrélation courant déterminé antérieurement afin d'en déduire un pourcentage d'allongement de la chaîne de transmission.

Dans une forme de réalisation, le dispositif comporte par ailleurs des moyens pour comparer le pourcentage d'allongement de la chaîne de transmission à au moins une valeur seuil et déclencher au moins une alarme en fonction de la valeur dudit pourcentage d'allongement de la chaîne.

Dans une forme de réalisation, les capteurs sont des capteurs magnétiques.

## BREVE DESCRIPTION DES FIGURES

L'invention sera mieux comprise à la lecture de la description qui suit et à l'examen des figures qui l'accompagnent. Celles-ci ne sont présentées qu'à titre indicatif et nullement limitatif de l'invention.

La figure 1A représente une chaîne de transmission mécanique et des capteurs contrôlant le brin tendu de la chaîne de transmission.

La figure 1B représente un détail d'un brin de la chaîne de transmission.

La figure 2 représente les étapes du procédé selon l'invention.

La figure 3A représente l'évolution de l'amplitude des signaux numériques générés à partir des capteurs en fonction du temps, dans une forme de réalisation.

La figure 3B représente l'évolution des enveloppes des signaux numériques générés à partir des capteurs en fonction du temps, dans la forme de réalisation de la figure 3A.

La figure 4 représente une évolution du coefficient de corrélation des signaux numériques générés à partir des capteurs dans la forme de réalisation de la figure 3A.

La figure 5A illustre une évolution du cumul des écarts, en valeur absolue, au fur et à mesure de l'allongement de la chaîne, entre le coefficient de corrélation déterminé au cours de l'étape de surveillance et un coefficient de corrélation initial calculé au cours de l'étape d'apprentissage dans le cas où le paramètre d'ajustement est choisi au cours de l'étape d'apprentissage comme maximisant une valeur absolue du coefficient de corrélation.

La figure 5B illustre une évolution du cumul dans le cas où le paramètre d'ajustement est choisi au cours de l'étape d'apprentissage comme minimisant une valeur absolue du coefficient de corrélation.

La figure 5C représente un abaque regroupant les courbes des figures 5A et 5B.

## DESCRIPTION DETAILLEE

L'invention concerne un procédé 10 de traitement du signal mis en oeuvre dans le cadre d'une mesure de l'allongement d'une chaîne de transmission mécanique 1.

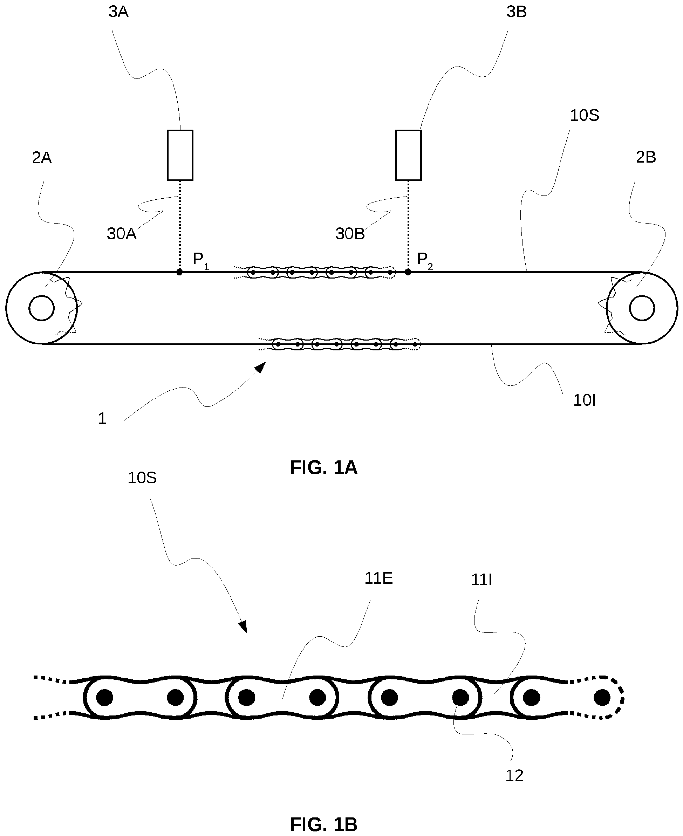

La figure 1A représente une chaîne de transmission mécanique 1 mise en mouvement par des pignons 2A, 2B. Des sens de rotation desdits pignons et de mouvement de ladite chaîne de transmission sont indiqués par des flèches sur la figure 1A. La chaîne de transmission 1 comporte un brin tendu, dans l'exemple illustré le brin supérieur 10S, et un brin de retour, dans l'exemple illustré le brin inférieur 10I, et comporte essentiellement une alternance de mailles internes 11I et de mailles externes 11E, comme illustré sur la figure 1B. La chaîne de transmission 1 présente généralement une maille de jonction non représentée sur les figures.

Bien entendu, les éléments représentés sur la figure 1A ne sont pas nécessairement à l'échelle.

Dans un souci de simplification, les mailles 11I, 11E illustrées sur la figure 1B ainsi que des dents des pignons 2A et 2B n'ont été représentées que partiellement sur la figure 1A. Le reste de la chaîne 1 est représenté symboliquement par une ligne moyenne passant par des douilles 12 de la chaîne. De la même manière, des dentures des pignons 2A, 2B ne sont représentées que partiellement, le reste desdites dentures des pignons étant par ailleurs représentées sur la figure par un diamètre primitif de chacun desdits pignons.

Par ailleurs, l'homme du métier comprendra à la lecture de ce qui suit que la taille des pignons 2A, 2B n'a pas d'importance et que les dimensions de l'un desdits pignons peuvent être, et sont généralement, différentes des dimensions de l'autre pignon. De la même manière, divers types de chaînes peuvent être utilisés sans limiter la portée de l'invention, par exemple chaînes à rouleaux ou chaînes à mailles jointives.

Deux capteurs 3A, 3B identiques dans leur fonctionnement sont placés dans un environnement de la chaîne de transmission 1. Les capteurs 3A, 3B sont placés de telle sorte que lesdits deux capteurs détectent un mouvement de la chaîne de transmission 1 en deux points fixes distincts P1, P2 du brin supérieur 10S tendu. L'homme du métier comprendra à la lecture de ce qui suit que, dans le cadre de la présente invention, la position des capteurs 3A, 3B vis-à-vis du brin tendu et la position relative desdits capteurs entre eux sont a priori quelconques et inconnues.

La notion de « point » doit se comprendre ici comme étant une portion du brin supérieur 10S située dans un champ de mesure d'un capteur, ladite portion étant de dimension la plus petite possible en fonction de la précision des capteurs utilisés. Une ligne de visée 30A, 30B de chacun des capteurs est représentée en trait interrompu sur la figure 1A.

Il doit être compris par « fixes » que les « points » P1, P2 sont immobiles dans un référentiel lié à un bâti (non représenté) de la chaîne de transmission 1. Les points P1, P2 ne sont donc pas rattachés physiquement à la chaîne de transmission 1 en mouvement par rapport audit bâti, mais il peut par exemple être considéré que ces points sont placés chacun à une distance fixe des centres des pignons 2A, 2B. Il convient toutefois de noter que la position des points P1, P2 et une distance entre lesdits points sont indifférentes dans le cadre de la mise en oeuvre du procédé selon l'invention, comme il sera compris par la suite. Cependant, les points P1 et P2 sont situés sur une partie du brin tendu non enroulé autour de l'un ou l'autre des pignons 2A, 2B.

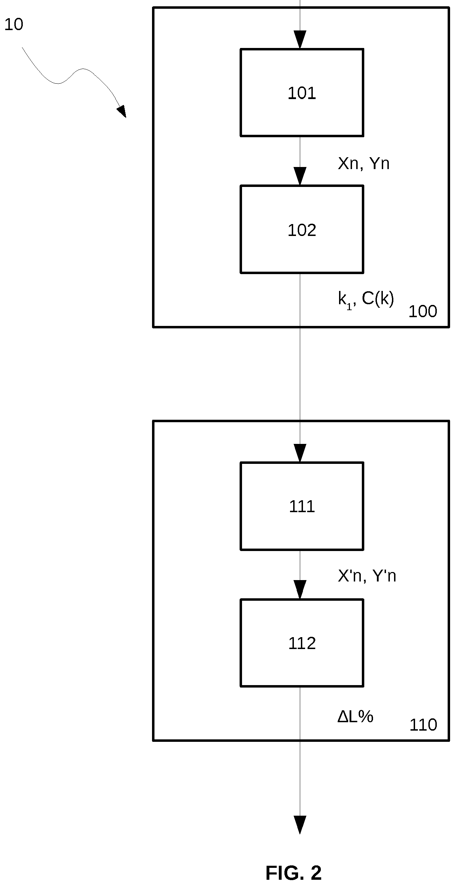

En référence à la figure 2, le procédé 10 selon l'invention comporte deux étapes principales: une étape d'apprentissage 100 et une étape de surveillance 110.

Dans une première sous-étape de mesurage 101 de l'étape d'apprentissage 100, les capteurs 3A, 3B réalisent chacun un mesurage d'une grandeur d'intérêt X, Y. La grandeur d'intérêt dépend du type de capteurs utilisés.

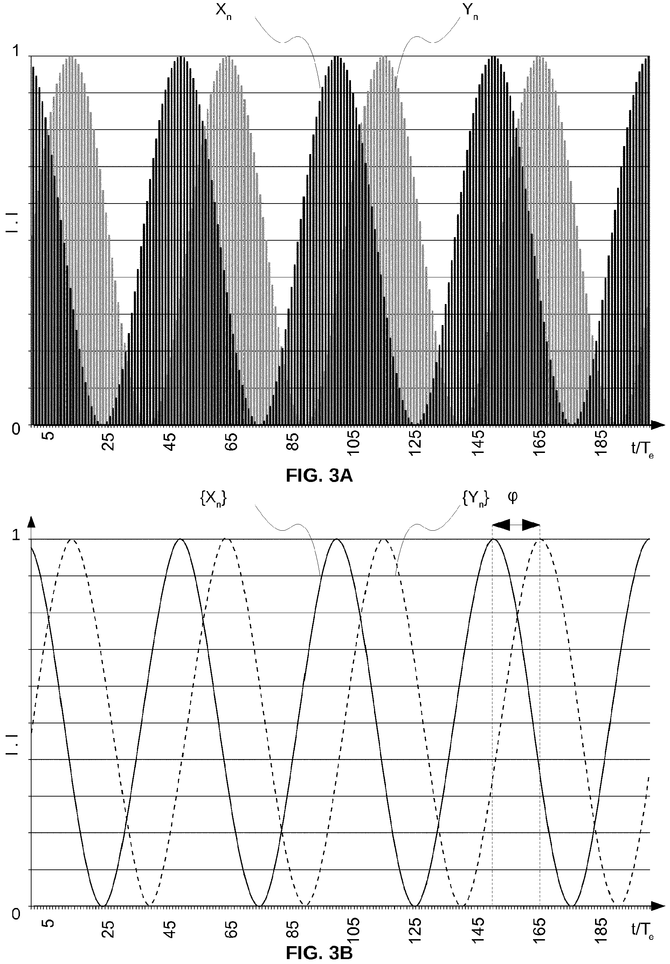

Dans un mode préféré de réalisation illustré sur les figures, les capteurs 3A, 3B sont des capteurs magnétiques détectant la quantité de métal aux points P1 et P2 respectivement de la chaîne de transmission 1. Les capteur 3A, 3B magnétiques produisent respectivement un signal analogique $X(t)$ et un signal analogique $Y(t)$ fonctions du temps, qui sont échantillonnés à une fréquence d'échantillonnage Fe et quantifiés pour obtenir des signaux numériques Xn, Yn comme représentés sur la figure 3A. La conversion des signaux analogiques $X(t)$, $Y(t)$ en les signaux numériques Xn, Yn est réalisée par un ou plusieurs convertisseurs analogiques/numériques éventuellement intégrés aux capteurs 3A, 3B.

Sur la figure 3A, le signal numérique Xn est associé au capteur 3A ; le signal numérique Yn est associé au capteur 3B. L'indice n est ici un indice générique. Classiquement, les signaux numériques Xn et Yn sont définis par :

$$\begin{cases} X_n = X(t_n) \\ Y_n = Y(t_n) \\ t_n = nT_e \end{cases}$$

Où n est un entier et Te une période d'échantillonnage des signaux numériques Xn, Yn et $X(t)$, $Y(t)$ sont les signaux analogiques représentant une évolution temporelle des grandeurs d'intérêt X, Y, une quantité de métal dans le cas décrit ici.

Dans un souci de clarté, des enveloppes {Xn}, {Yn} des signaux échantillonnés détectés par les capteurs 3A, 3B sont représentées sur la figure 3B. Sur la figure, l'enveloppe {Xn} associée au capteur 3A apparaît en trait plein, tandis que l'enveloppe {Yn} associée au capteur 3B apparaît en trait interrompu.

Sur la figure 3B, un pic de l'enveloppe {Xn} du signal numérique Xn correspond au passage d'une liaison inter-mailles, c'est-à-dire une quantité de métal maximale passant dans le champ de mesure du capteur au point P1. Un pic de l'enveloppe {Yn} du signal numérique Yn correspond au passage d'une liaison inter-mailles, c'est-à-dire une quantité de métal maximale passant dans le champ de mesure du capteur au point P2. De la même manière, un creux des enveloppes correspond à la partie centrale d'une maille 11I, 11E, c'est-à-dire une quantité minimale d'élément métallique dans les champs de mesure des capteurs 3A, 3B aux points P1 et P2 respectivement.

Les courbes des figures 3A et 3B correspondent à une évolution d'une amplitude IXnI, IYnI, notée I . I sur les dessins, des signaux numériques Xn, Yn générés respectivement par les capteurs 3A, 3B, ou de leur enveloppe. Sur les figures, les signaux numériques sont normés, de sorte que l'amplitude des signaux est inférieure ou égale à 1, mais en pratique une normalisation n'est pas indispensable.

D'autres capteurs peuvent également être mis en oeuvre sans toutefois limiter la portée de l'invention, par exemple des capteurs optiques. Dans ce dernier cas, le capteur pourra par exemple détecter la présence ou l'absence de matière ; les courbes résultantes pouvant osciller entre deux valeurs, selon le cas, par exemple entre 1 en présence de matière et -1 en absence de matière.

Il peut être observé que les signaux Xn et Yn sont déphasés d'un déphasage $\varphi$. La valeur de ce déphasage $\varphi$ est a priori inconnue, non nécessairement multiple entier de la période d'échantillonnage Te, et dépend notamment de la distance entre les capteurs 3A, 3B et d'une vitesse V de la chaîne.

Les signaux numériques Xn, Yn comprennent un nombre N d'échantillons, supérieur à deux fois le nombre d'échantillons par cycle Nc et préférentiellement environ égal à vingt fois le nombre d'échantillons par cycle Nc, un cycle étant défini comme un motif élémentaire du signal Xn ou Yn répété au cours du temps de manière sensiblement périodique. Dans l'exemple illustré sur les figures, le nombre d'échantillons par cycle Nc est égal à 51.

Dans une sous-étape ultérieure d'ajustement 102, il est calculé un coefficient de corrélation C(k) entre les signaux numériques Xn et Yn mesurés, assorti d'un paramètre k entier variable :

$$C(k) = \frac{1}{M} \sum_{i=1}^{M} \frac{X_i - mx}{\sigma_x} \times \frac{Y_{i+k} - my}{\sigma_y}$$

Où :

- M est un entier compris entre deux fois Nc et N, N étant par exemple égal à vingt fois Nc ;
- mx et my sont respectivement les moyennes des valeurs des signaux Xn et Yn sur les M échantillons ;
- $\sigma$x et $\sigma$y sont respectivement les écarts-types des valeurs des signaux Xn et Yn sur les M échantillons.

Le coefficient de corrélation C(k) quantifie donc une corrélation entre le signal numérique Xn et une version du signal numérique Yn décalée de k échantillons, dans le sens des n croissants ou décroissants suivant que k est respectivement positif ou négatif.

A titre d'exemple, pour k = 0, le coefficient de corrélation C(0) correspond au coefficient de corrélation entre les signaux Xn et Yn tels que mesurés.

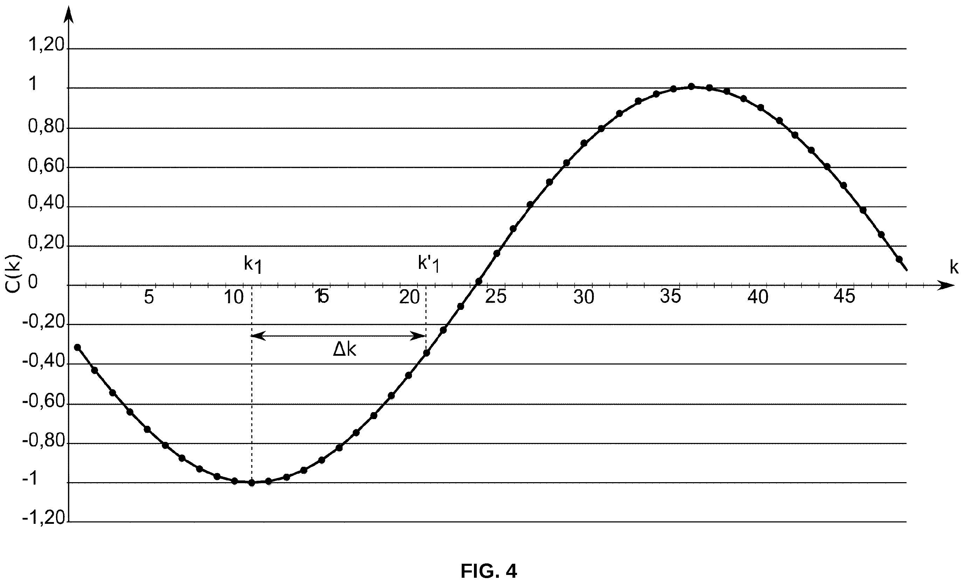

La figure 4 illustre la variation du coefficient de corrélation C(k) en fonction du paramètre k, k variant de un à quarante-huit.

A la lecture de la courbe de la figure 4, il apparaît que :

- le coefficient de corrélation C(11) est proche de -1 ce qui signifie qu'il existe une corrélation forte entre le signal numérique Xn et le signal numérique Yn décalé de onze échantillons dans le sens des n croissants ;
- le coefficient de corrélation C(24) est proche de zéro, ce qui signifie que la corrélation est faible entre le signal numérique Xn et le signal numériques Yn décalé de vingt-quatre échantillons dans le sens des n croissants ;
- le coefficient de corrélation C(36) est égal à 1, ce qui signifie qu'il existe une corrélation forte entre le signal numérique Xn et le signal numérique Yn décalé de trente-six échantillons dans le sens des n croissants.

Au cours de la sous-étape d'ajustement 102, il est recherché le paramètre k permettant de se rapprocher autant que possible d'une corrélation forte entre le signal Xn et le signal Yn décalé. En d'autres termes, il est recherché un paramètre d'ajustement k1 maximisant une valeur absolue du coefficient de corrélation C(k) :

$$|C(k_1)| = \max_k \left| \frac{1}{M} \sum_{i=1}^{M} \frac{X_i - m_X}{\sigma_X} \times \frac{Y_{i+k} - m_Y}{\sigma_Y} \right|$$

Dans l'exemple détaillé ici, le maximum de la valeur absolue du coefficient de corrélation C(k) est atteint pour k égal à onze ou k égal trente-six. Il est retenu arbitrairement un paramètre d'ajustement k1 égal à onze, mais il pourrait également être retenu un paramètre d'ajustement égal à trente-six. Par la suite, le coefficient de corrélation C(k1) calculé au cours de l'étape d'apprentissage 100 et évalué en k1 est appelé « coefficient de corrélation initial ».

Dans la suite de la description, une apostrophe est utilisée pour distinguer les grandeurs mesurées ou calculées au cours de l'étape de surveillance 110 de celles mesurées ou calculées au cours de l'étape d'apprentissage 100.

L'étape de surveillance 110 du procédé 10 selon l'invention comporte une sous-étape de mesurage 111 et une sous-étape de comparaison 112.

La sous-étape de mesurage 111 est similaire à la sous-étape de mesurage 101 de l'étape d'apprentissage 100, et consiste à générer des signaux numériques X'n et Y'n à l'aide respectivement des capteurs 3A et 3B.

Une fois la sous-étape de mesurage 111 terminée, un coefficient de corrélation courant C'(k1) entre les signaux X'n, Y'n nouvellement générés est calculé au cours d'une sous-étape de comparaison 112, pour le paramètre k égal à k1, k1 étant le paramètre d'ajustement déterminé au cours de l'étape d'apprentissage 100 :

$$C'(k_1) = \frac{1}{M} \sum_{i=1}^{M} \frac{X'_i - m_{X'}}{\sigma_{X'}} \times \frac{X'_{i+k_1} - m_{Y'}}{\sigma_{Y'}}$$

Les valeurs des coefficients C(k1) et C'(k1) sont ensuite comparées au cours de cette même sous-étape de comparaison 112.

En absence d'allongement de la chaîne de transmission 1, il y a égalité entre les coefficients de corrélation C(k1) et C'(k1).

En présence d'un allongement de la chaîne de transmission 1, un écart est constaté entre lesdits coefficients de corrélation, le coefficient de corrélation courant C'(k1) correspondant alors à un point de la courbe de la figure 4 situé au-delà de k1, c'est-à-dire :

$$C'(k_1) = C(k'_1) = C(k_1 + \Delta k)$$

où k'1 est un paramètre voisin de k1 et $\Delta k$ est une perturbation positive.

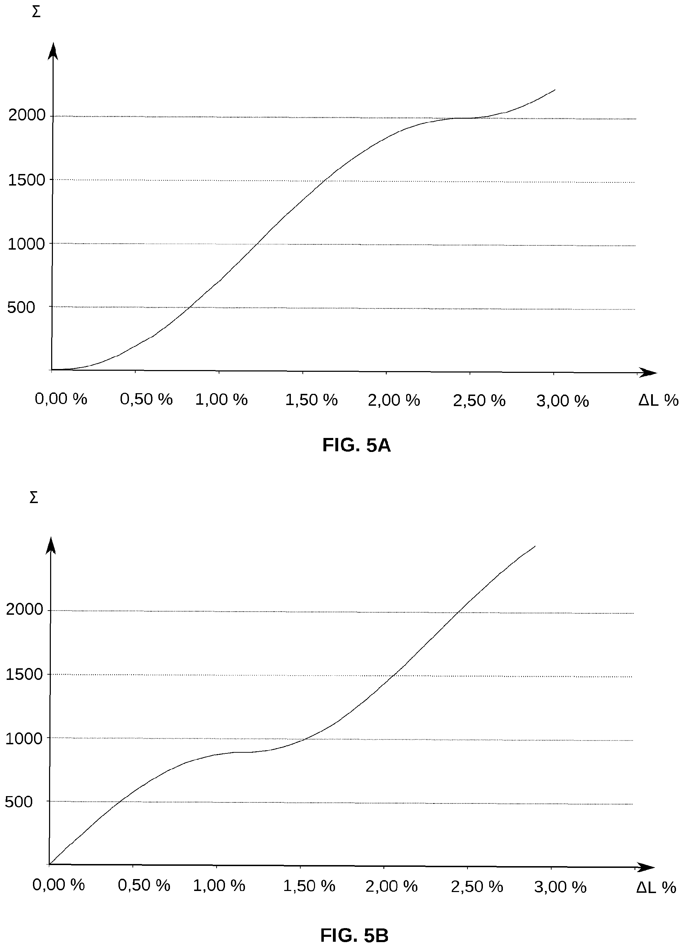

La figure 5A est une courbe représentant une évolution d'un cumul $\Sigma$ des écarts, en valeur absolue, au fur et à mesure de l'allongement de la chaîne 1, entre le coefficient de corrélation courant C'(k1) et le coefficient de corrélation initial C(k1), en fonction d'un pourcentage d'allongement $\Delta L\%$ correspondant à un rapport d'un allongement $\Delta L$ d'une maille de ladite chaîne à une longueur L0 de ladite maille à l'état neuf :

$$\Delta L\% = \frac{\Delta L}{L_0}$$

$$\Sigma(\Delta L\%) = \int_0^{\Delta L\%} |C'(k_1, \Delta l\%) - C(k_1)| d\Delta l\%$$

Où $\Delta l\%$ est une variable muette représentant le pourcentage d'allongement et d$\Delta l\%$ est une variation infinitésimale de cette variable.

Dans le cas illustré sur la figure 5A, le paramètre d'ajustement k1 est égal à onze.

La courbe de la figure 5A peut être obtenue par calcul, ou par des mesures réalisées sur une chaîne tout au long de sa durée de vie.

En pratique, au cours de la sous-étape de comparaison 112, le cumul $\Sigma$ des écarts peut être approché de manière itérative, de la manière suivante :

$$\begin{cases} \Sigma(p+1) = \Sigma(p) + |C'(k_1, p+1) - C'(k_1, p)| \\ \Sigma(0) = 0 \end{cases}$$

Où :

- p désigne la p-ième itération de calcul, avec p un entier naturel ;
- $\Sigma(p)$ désigne le cumul $\Sigma$ des écarts à la p-ième itération ;
- $C'(k_1,p + 1)$ désigne le coefficient de corrélation courant, évalué en k1, à l'itération p+1, et déterminé au cours de la sous-étape de comparaison 112 courante ;
- $C'(k_1,p)$ désigne le coefficient de corrélation courant, évalué en k1, à l'itération p et déterminé au cours d'une sous-étape de comparaison 112 antérieure.

Une itération de calcul se déroule au cours d'une itération de la sous-étape de comparaison 112, l'étape de surveillance 110 étant répétée tout au long de la durée de vie de la chaîne 1, l'itération p=0 correspondant à la première occurrence de ladite étape de surveillance.

Connaissant le cumul $\Sigma$ du coefficient de corrélation courant, on déduit de la lecture de la figure 5A le pourcentage d'allongement $\Delta L\%$.

Il peut être remarqué que le paramètre d'ajustement k1 peut être choisi de manière différente au cours de l'étape d'apprentissage 100, et ne correspond pas nécessairement à un maximum en valeur absolue du coefficient de corrélation. Ainsi, ce paramètre peut être choisi par exemple comme correspondant sensiblement à un zéro de la courbe du coefficient de corrélation C(k) lors de l'étape d'apprentissage 100.

Le choix du paramètre d'ajustement k1 a une influence sur la sensibilité de la détermination du pourcentage d'allongement $\Delta L\%$.

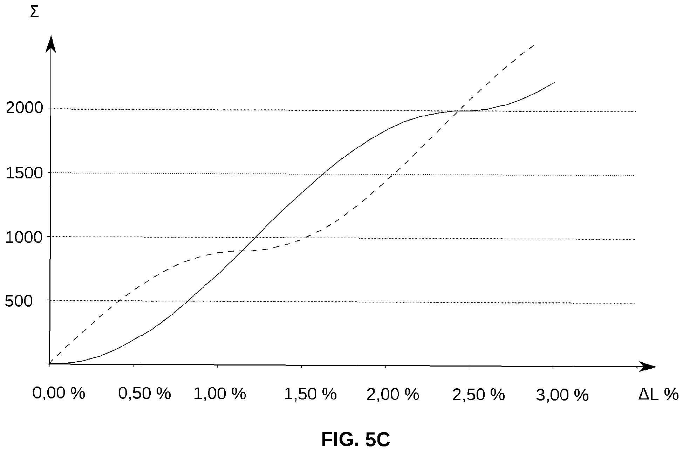

En effet, comme il peut être remarqué sur la figure 4, la dérivée du coefficient de corrélation par rapport à k est sensiblement nulle pour le paramètre d'ajustement k1 égal à onze. Ainsi, la variation du coefficient de corrélation autour de ce paramètre d'ajustement k1 particulier est relativement peu importante, ce qui signifie qu'un léger allongement de la chaîne aura peu d'impact sur le coefficient de corrélation. Ceci est illustré sur la figure 5, sur laquelle il peut être remarqué que la forme de la courbe est relativement « plate » entre 0% et 0,20% de pourcentage d'allongement $\Delta L\%$.

De par l'évolution du coefficient de corrélation en fonction du paramètre k, l'allongement de la chaîne va amener le coefficient de corrélation courant C'(k1) évalué en k1 sur la portion de la courbe de coefficient de corrélation sur laquelle la dérivée par rapport à k est sensiblement maximale, c'est-à-dire en k égal à 24 sur la figure 4. Sur cette portion, un léger allongement de la chaîne aura un impact fort sur le coefficient de corrélation. Ceci est illustré sur la figure 5A, sur laquelle il peut être remarqué que la forme de la courbe est sensiblement affine entre 0,20% et 2,25% de pourcentage d'allongement. Sur cette plage de valeurs, la sensibilité de la détermination du pourcentage d'allongement sera élevée, un allongement même léger ayant un impact conséquent sur le cumul $\Sigma$. Dans l'exemple illustré sur la figure 5A, une variation de 0,1% du pourcentage d'allongement $\Delta L\%$ sur cette plage de valeurs se traduit par une variation du cumul $\Sigma$ sensiblement égale à 100%, soit mille fois supérieure à celle du pourcentage d'allongement $\Delta L\%$. Ainsi, une légère variation de l'allongement est déterminée avec précision.

De manière générale, l'invention permet d'atteindre des valeurs de sensibilité au minimum de l'ordre de 50 sur de telles plages de valeurs, c'est-à-dire qu'une variation de 0,1% du pourcentage d'allongement $\Delta L\%$ conduit à une variation du coefficient de corrélation C'(k1) de l'ordre de 5%. Le choix du paramètre d'ajustement k1 pourra ainsi varier d'une application à une autre.

De par la périodicité du coefficient de corrélation C(k) en fonction du paramètre k, les variations de forme de la courbe de la figure 5A se répètent, passant de nouveau par un plateau entre 2,25% et 2,70% du pourcentage d'allongement, puis par une phase sensiblement affine autour de 3%.

Le choix du paramètre d'ajustement k1 égal à onze permet donc une sensibilité élevée de la détermination du pourcentage d'allongement $\Delta L\%$ sur certaines plages de valeurs, ici entre 0,20% et 2,25% et autour de 3%.

La figure 5B illustre une courbe similaire à celle de la figure 5A, mais pour laquelle le paramètre d'ajustement k1 retenu est égal à vingt-quatre, c'est-à-dire correspond à un minimum en valeur absolue du coefficient de corrélation C(k) calculé au cours de l'étape d'apprentissage 100.

Comme il peut être remarqué sur la figure 4, la dérivée du coefficient de corrélation C(k) par rapport à k est sensiblement maximale pour le paramètre d'ajustement k1 égal à vingt-quatre. Ainsi, la variation du coefficient de corrélation autour de ce paramètre d'ajustement k1 particulier est relativement importante, ce qui signifie qu'un léger allongement de la chaîne aura un impact conséquent sur le coefficient de corrélation. Ceci est illustré sur la figure 5B, sur laquelle il peut être remarqué que la forme de la courbe est sensiblement linéaire entre 0% et 1,00% de pourcentage d'allongement $\Delta L\%$. Sur cette plage de valeurs, la sensibilité de la détermination du pourcentage d'allongement sera élevée, un allongement même léger ayant un impact conséquent sur le cumul $\Sigma$, de la même manière que discuté précédemment pour la figure 5A.

De par l'évolution du coefficient de corrélation C(k) en fonction du paramètre k, l'allongement de la chaîne va amener le coefficient de corrélation courant C'(k1) évalué en k1 sur la portion de la courbe de coefficient de corrélation sur laquelle la dérivée par rapport à k est sensiblement nulle, c'est-à-dire en k égal à trente-six sur la figure 4. Sur cette portion, un léger allongement de la chaîne aura un impact mineur sur le coefficient de corrélation et donc sur le cumul $\Sigma$. Ceci est illustré sur la figure 5B, sur laquelle il peut être remarqué que la courbe présente un plateau entre 1,00% et 1,25% de pourcentage d'allongement.

Ainsi, la courbe de la figure 5B correspond à la courbe de la figure 5A translatée.

Le choix du paramètre d'ajustement k1 permet ainsi de sélectionner la plage de pourcentage d'allongement $\Delta L\%$ sur laquelle la détermination dudit pourcentage exige une sensibilité importante, par exemple aux environs de la limite de tolérance de 3%. Le choix de ce paramètre d'ajustement k1 pourra varier d'une application à une autre.

Préférentiellement, plusieurs courbes représentant l'évolution du cumul $\Sigma$ en fonction du pourcentage d'allongement $\Delta L\%$ sont représentées, pour des paramètres d'ajustement k1 différents, sur un abaque, pour permettre leur lecture, comme illustré par exemple sur la figure 5C regroupant la courbe de la figure 5A, en trait plein, et la courbe de la figure 5B, en traits interrompus. L'abaque est par exemple réalisé dans une étape préalable à l'étape d'apprentissage 100. La valeur du pourcentage d'allongement $\Delta L\%$ est ainsi déduite de la lecture de l'abaque en fonction du paramètre d'ajustement k1 retenu. Le choix du paramètre d'ajustement k1 lors de l'étape d'apprentissage 100 peut ainsi être réalisé en fonction de la plage de valeurs d'intérêt du pourcentage d'allongement $\Delta L\%$, à la lecture de l'abaque. Par exemple, si la plage de valeurs d'intérêt est comprise entre 0% et 1%, il sera choisi à la lecture de l'abaque de la figure 4 un paramètre d'ajustement associé à un minimum d'une valeur absolue du coefficient de corrélation C(k), comme vu plus haut.

Dans un mode préféré de mise en oeuvre du procédé selon l'invention, au moins une alarme est mise en oeuvre pour prévenir un opérateur d'un allongement excessif de la chaîne de transmission 1. A titre d'exemple, il peut être mis en oeuvre trois alarmes se déclenchant pour des pourcentages d'allongement $\Delta L\%$ de 2%, 2,5% et 3%. Le paramètre d'ajustement k1 pourra être choisi pour permettre une détermination particulièrement précise du pourcentage d'allongement $\Delta L\%$ autour d'au moins une de ces valeurs, c'est-à-dire de sorte qu'au moins une de ces valeurs se trouve sur une plage de valeurs pour laquelle la sensibilité de la détermination est importante, comme décrit précédemment.

L'étape de surveillance 110 est répétée à intervalles réguliers, par exemple toutes les trente secondes ou toutes les minutes, afin d'assurer une surveillance de l'allongement de la chaîne de transmission 1 au cours du temps.

La mise en oeuvre du procédé selon l'invention permet de déterminer l'allongement de la chaîne de transmission 1 avec une précision importante, en particulier en raison du choix du paramètre d'ajustement k1 au cours de l'étape d'apprentissage 100.

Le procédé 10 selon l'invention présente en particulier les avantages suivants :

- la position des capteurs le long du brin tendu de la chaîne de transmission est libre, en particulier, il n'est pas nécessaire de connaître la distance entre ces capteurs ;
- il n'est pas nécessaire de connaître la vitesse V de la chaîne ;
- il n'est pas nécessaire de connaître la géométrie la chaîne de transmission 1 ; en particulier, une pollution de la chaîne de transmission du type présence de limaille de fer sur quelques mailles, n'empêche pas la détermination du pourcentage d'allongement $\Delta L\%$ ;
- la détermination de l'allongement bénéficie d'une précision importante, en particulier en raison du choix du paramètre d'ajustement k1 au cours de l'étape d'apprentissage, lequel choix permet d'obtenir sur certaines plages de valeur d'intérêt du pourcentage d'allongement une sensibilité de la détermination du pourcentage d'allongement $\Delta L\%$ généralement supérieure à 50.

## Revendications

1. Procédé (10) pour la détermination d'un allongement d'une chaîne de transmission mécanique (1) comportant un brin tendu contrôlé par deux capteurs (3A, 3B), ledit procédé étant **caractérisé en ce qu'**il comporte :

   - une étape d'apprentissage (100) au cours de laquelle :

      • des signaux numériques Xn, Yn sont générés à partir desdits capteurs au passage du brin tendu devant lesdits capteurs ;
      • un paramètre d'ajustement k1 entier est choisi sur la base desdits signaux numériques, en fonction d'un objectif de sensibilité de la détermination de l'allongement de la chaîne de transmission (1) ;
      • un coefficient de corrélation C(k) entre lesdits signaux numériques est évalué au paramètre d'ajustement k1 pour déterminer un coefficient de corrélation initial C(k1) ;

   - une étape ultérieure de surveillance (110) au cours de laquelle :

      • des signaux numériques X'n, Y'n sont générés à partir desdits capteurs au passage du brin tendu devant lesdits capteurs ;

• un coefficient de corrélation courant C'(k1) entre lesdits signaux numériques X'n, Y'n est évalué au paramètre d'ajustement k1 ;

• est déterminé un écart entre le coefficient de corrélation courant C'(k1) et le coefficient de corrélation initial C(k1) ou un coefficient de corrélation courant C'(k1) déterminé antérieurement, afin d'en déduire un pourcentage d'allongement ΔL% de la chaîne de transmission mécanique (1).

2. Procédé selon la revendication 1 **caractérisé en ce que** le pourcentage d'allongement ΔL% est déduit de la lecture d'un abaque représentant un cumul Σ des écarts en valeur absolue entre le coefficient de corrélation courant C'(k1) et le coefficient de corrélation initial C(k1) en fonction du pourcentage d'allongement ΔL% et du paramètre d'ajustement k1.

3. Procédé selon la revendication 1 ou la revendication 2 **caractérisé en ce que** le paramètre d'ajustement k1 est choisi comme étant un paramètre maximisant ou minimisant une valeur absolue du coefficient de corrélation C(k) entre les signaux numériques (Xn, Yn).

4. Procédé selon l'une quelconque des revendications précédentes **caractérisé en ce que** l'étape de surveillance (110) comporte une sous-étape de déclenchement d'au moins une alarme lorsque le pourcentage d'allongement de la chaîne de transmission (1) dépasse au moins une valeur seuil.

5. Procédé selon la revendication 4 **caractérisé en ce qu'**une de l'au moins une valeur seuil est égale à 3%.

6. Dispositif pour la mise en oeuvre du procédé selon l'une quelconque des revendications précédentes, comportant :

   - une chaîne de transmission mécanique (1) présentant un brin tendu ;
   - deux capteurs (3A, 3B) à partir desquels sont générés des signaux numériques Xn, Yn, X'n, Y'n au passage de ladite chaîne de transmission devant lesdits capteurs ;

   ledit dispositif étant **caractérisé en ce qu'**il comporte par ailleurs des moyens de calcul pour :

   - choisir un paramètre d'ajustement k1 ;
   - évaluer un coefficient de corrélation initial C(k1) entre lesdits signaux numériques au paramètre d'ajustement k1 ;
   - évaluer un coefficient de corrélation courant C'(k1) au paramètre d'ajustement k1, au cours du temps, et le comparer au coefficient de corrélation initial C(k1) ou à un coefficient de corrélation courant C'(k1) déterminé antérieurement afin d'en déduire un pourcentage d'allongement ΔL% de la chaîne de transmission (1).

7. Dispositif selon la revendication 6 **caractérisé en ce qu'**il comporte par ailleurs des moyens pour comparer le pourcentage d'allongement ΔL% de la chaîne de transmission (1) à au moins une valeur seuil et déclencher au moins une alarme en fonction de la valeur dudit pourcentage d'allongement de la chaîne.

8. Dispositif selon la revendication 6 ou la revendication 7 **caractérisé en ce que** les capteurs (3A, 3B) sont des capteurs magnétiques.

3A                                                              3B

                                                                          10S

2A                                                                              2B

                30A                        30B

                        P₁                              P₂

                                                                          10I

1

**FIG. 1A**

10S

                                            11E        11I

                                                            12

**FIG. 1B**

**FIG. 2**

FIG. 3A

FIG. 3B

FIG. 4

**FIG. 5A**

**FIG. 5B**

FIG. 5C

Europäisches
Patentamt

European
Patent Office

Office européen
des brevets

**RAPPORT DE RECHERCHE EUROPEENNE**

Numéro de la demande

EP 17 20 8001

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2016/116356 A1 (GOLDSTEIN MICHAEL D [IL]) 28 avril 2016 (2016-04-28) | 1,6 | INV. G01B21/16 |
| Y | * alinéas [0060], [0067]; figures 4a,4c,7c * ----- | 1-8 | F16G13/00 G01M13/02 G01B5/16 |
| Y | EP 3 196 625 A1 (RENOLD PLC [GB]) 26 juillet 2017 (2017-07-26) * le document en entier * ----- | 1-8 | G01B7/04 G01B11/14 |
| Y | JP 2000 291748 A (HITACHI BUILDING SYS CO LTD) 20 octobre 2000 (2000-10-20) * le document en entier * ----- | 1-8 | |
| Y | US 2016/010977 A1 (FROST CHARLES C [US] ET AL) 14 janvier 2016 (2016-01-14) * le document en entier * ----- | 1-8 | |

DOMAINES TECHNIQUES RECHERCHES (IPC)

G01B
G01M
F16G

Le présent rapport a été établi pour toutes les revendications

| Lieu de la recherche | Date d'achèvement de la recherche | Examinateur |
|---|---|---|
| Munich | 23 avril 2018 | Grand, Jean-Yves |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 17 20 8001

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-04-2018

| Document brevet cité au rapport de recherche | | Date de publication | Membre(s) de la famille de brevet(s) | | Date de publication |
|---|---|---|---|---|---|
| US 2016116356 | A1 | 28-04-2016 | US | 2016116356 A1 | 28-04-2016 |
| | | | WO | 2014199376 A1 | 18-12-2014 |
| EP 3196625 | A1 | 26-07-2017 | AUCUN | | |
| JP 2000291748 | A | 20-10-2000 | JP | 3570914 B2 | 29-09-2004 |
| | | | JP | 2000291748 A | 20-10-2000 |
| US 2016010977 | A1 | 14-01-2016 | CA | 2954521 A1 | 14-01-2016 |
| | | | EP | 3167267 A2 | 17-05-2017 |
| | | | US | 2016010977 A1 | 14-01-2016 |
| | | | WO | 2016007454 A2 | 14-01-2016 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9772179 B
- GB 2377918 A
- US 5563392 A